Europäisches Patentamt

European Patent Office

Office européen des brevets

(11) Numéro de publication: **0 213 969 B1**

# (12) FASCICULE DE BREVET EUROPEEN

(45) Date de publication de fascicule du brevet:
**04.09.91**

(51) Int. Cl.⁵: **B29C 55/04**

(21) Numéro de dépôt: **86400938.6**

(22) Date de dépôt: **29.04.86**

(54) **Procédé et appareil pour réaliser l'étirage bi-axial de matière plastique et produit ainsi obtenu.**

(30) Priorité: **29.04.85 US 728220**

(43) Date de publication de la demande:
**11.03.87 Bulletin 87/11**

(45) Mention de la délivrance du brevet:
**04.09.91 Bulletin 91/36**

(84) Etats contractants désignés:
**AT BE CH DE FR GB IT LI NL SE**

(56) Documents cités:
**EP-A- 0 110 751**     **FR-A- 2 026 328**
**FR-A- 2 281 275**     **LU-A- 55 225**
**US-A- 3 441 638**     **US-A- 3 833 973**

(73) Titulaire: **NEWTEC INTERNATIONAL**
**Boulevard Lepic**
**F-73106 Aix-les-Bains(FR)**

(72) Inventeur: **Thimon, Jacques B.**
**P.O. Box 1161**
**USA Mountainside N.J. 07032(US)**

(74) Mandataire: **Derambure, Christian**
**BUGNION ASSOCIES 55, rue Boissonade**
**F-75014 Paris(FR)**

## Description

La présente invention concerne des procédés et appareils automatiques pour réaliser l'étirage biaxial de matière plastique et plus particulièrement des procédés d'emballage automatiques.

Les matières plastiques sont couramment utilisées pour réaliser des emballages de protection. Par exemple, des charges devant être stockées, transportées ou distribuées peuvent nécéssiter une protection pour leur manipulation ou, contre l'environnement, etc.... Egalement, des charges à unités multiples peuvent requérir un emballage pour réaliser une charge unique et monobloc plus facilement gérable.

On connaît principalement deux types d'emballage en matière plastique. Les emballages thermorétractables consistent à envelopper une charge puis à soumettre l'emballage à une température élevée. Cela provoque la contraction de la matière plastique qui serre ainsi la charge. Les inconvénients de ces emballages thermorétractables sont bien connus. En particulier, ils impliquent l'utilisation de moyens de chauffage coûteux en investissement et surtout en fonctionnement. De plus, le film d'emballage peut devenir rigide et ainsi cesser d'exercer la force de compression souhaitée.

Le second type d'emballage plastique est l'emballage étirable. Dans ce cas, la charge est emballée dans un film de matière plastique étirée de manière que par contraction elle enserre la charge. La matière plastique étirée n'est pas rigide et continue de maintenir sa force de compression même si la charge reste au repos.

Cependant, les emballages étirables actuellement connus ne sont pas sans limites. En effet, par opposition à l'emballage thermorétractable, dans lequel la contraction intervient dans la longueur et dans la largeur du film d'emballage, c'est-à-dire biaxialement, l'emballage étirable n'est contracté que dans la direction dans laquelle il a été préalablement étiré. Compte tenu qu'un étirage simultané dans plusieurs directions implique des problèmes mécaniques considérables, la matière plastique étirable a jusqu'à présent été étirée seulement dans le sens de la longueur du film d'emballage.

On connaît aujourd'hui principalement deux types de machines d'emballage à film étirable commercialisés, disponibles sur le marché. Les machines de banderolage et les machines dîtes "rideau" ou "pass through". Dans les machines de banderolage, la charge est montée pivotante ou l'alimentation en film pivote autour de la charge. Dans les machines "rideau" la charge est déplacée dans un rideau de film en matière plastique conformé en U puis soudé derrière la charge.

Le matériau plastique considéré peut être du film continu ou encore un filet ou un matériau comportant des mailles ou équivalent. Pour la simplicité de la description, ces différentes variantes sont désignées par la suite sous le vocable film.

Les machines d'emballage étirables utilisent différentes techiques pour réaliser l'étirage. La première technique connue est celle du freinage. Dans les machines de banderolage, cette technique consiste a freiner la bobine de film d'emballage lorsque la charge est entraînée en rotation et, de ce fait entraîne le film depuis la bobine en question. Dans les machines de type rideau, le rideau de film d'emballage est généralement réalisé entre deux bobines de film. Le freinage est appliqué sur l'une ou sur les deux bobines de film lorsque la charge coopère avec le rideau en vue de l'emballage. Des dispositifs de soudage ferment le film derrière la charge pour réaliser un emballage complet.

Les dispositifs de freinage étirent le film d'emballage lorsqu' il est enroulé autour de la charge. Cet étirage produit une diminution de la largeur du film appelée habituellement "NECK-DOWN", c'est-à-dire la structure du film. Cette technique d'étirage par freinage Présente un certain nombre d'inconvénients. L'étirage est irrégulier du fait des coins, des angles, ou des saillies de la charge, ce qui tend à couper le film d'emballage. Pour éviter, la rupture du film, le taux d'étirage est généralement diminué et il en résulte un emballage lâche. Enfin, compte tenu que l'étirage est principalement réalisé dans la longueur du film d'emballage, l'emballage n'exerce pas sur la charge une force de compression dans le sens transversal du film.

Afin de surmonter certains de ces problèmes, il a été proposé une seconde technique d'étirage appelée le pré-étirage. Cette technique est décrite par exemple dans le brevet français 2 281 275. Il a été prouvé que cette technique était généralement acceptable pour produire un film en matière plastique d'emballage qui exerce une force dans la longueur du film. Compte tenu que la force nécessaire à l'étirage du film est plus grande que la force nécessaire pour s'opposer à sa contraction ultérieure, le pré-étirage du film réduit les problèmes de rupture du film résultant des saillies, coins de la charge, etc....

Les dispositifs de pré-étirage fonctionnent en faisant passer le film de matière plastique d'emballage à étirer à travers une série de rouleaux, les rouleaux avals tournant plus vite que les rouleaux amonts. Le degré d'étirage du film entre les séries de rouleaux dépend de la différence de vitesse de rotation des rouleaux. En variante les rouleaux peuvent pivoter à même vitesse mais le rouleau aval a un diamètre plus grand que le rouleau amont. Le film ainsi étiré peut être utilisé pour l'emballage soit dans une machine de banderolage, soit dans une machine rideau. Dans certains cas, la charge se déplace à une vitesse supérieure à celle avec laquelle le film pré-étiré est fourni de sorte qu'un étirage supplémentaire du film est réalisé lorsque le film est appliqué sur la charge. Dans les dispositifs qui combinent le pré-étirage et le freinage, le "NECK-DOWN" du film intervient en deux points entre les rouleaux eux-mêmes et la charge.

Selon le document EP-A-0 110 751 on réalise le pré-étirage d'un film au moyen d'un dispositif à deux rouleaux ou même à un seul rouleau. Et le rapport d'étirage peut être modifié. Dans le cas d'un rouleau unique, les génératrices aval sont déplacées plus vite que les génératrices amont. Selon ce document, l'étirage du film est seulement longitudinal.

Une caractéristique commune des machines et dispositifs précédemment décrits est l'étirage unidirectionnel, c'est-à-dire l'étirage du film dans sa longueur. Bien que le pré-étirage réduise les problèmes de rupture et procure un emballage plus serré, l'étirage n'est réalisé que le long de l'axe du film. Compte-tenu que les utilisateurs souhaitent une contraction bi-axiale du film ainsi que cela est obtenu avec le film rétractable, il serait avantageux de procurer un procédé et un appareil pour réaliser l'étirage du film en matière plastique dans deux directions : la longueur et la largeur. De tels films ainsi étirés de façon bi-axiale exerceraient des forces de contraction plus uniformes sur les charges emballées et particulièrement sur les charges de forme irrégulière. De plus, un "NECK-DOWN" uniforme ne permet pas de réaliser les compensations nécessaires pour les saillies, coins, etc... En conséquence, il serait également avantageux d'avoir un "NECK-DOWN" non uniforme. Par conséquent, l'invention a pour objet un appareil pour l'étirage bi-axial de film en matière plastique et un procédé pour utiliser un tel appareil.

L'invention a également pour objet de produire un emballage mettant en oeuvre un film en matière plastique étiré de façon bi-axiale.

L'invention a également pour objet de procurer un film en matière plastique étiré de façon bi-axiale qui n'a pas un "NECK-DOWN" uniforme.

L'invention concerne un appareil nouveau et sa mise en oeuvre dans un procédé pour réaliser automatiquement l'étirage d'un film en matière plastique. Pour résoudre les problèmes mentionnés précédemment, le film en matière plastique est étiré périodiquement à la fois dans sa longueur et dans sa largeur. Un emballage réalisé à partir d'une machine utilisant l'invention n'exerce pas des forces de compression seulement dans la longueur du film mais aussi dans la largeur du film. Du fait que l'étirage est réalisé essentiellement avant que le film ne soit appliqué sur la charge, les problèmes de rupture sont réduits.

De plus, étant donné que le film n'est pas étiré de façon uniforme, il est possible d'avoir les compensations nécessaires pour les saillies et les coins qui sinon sont la source de rupture du film. En conséquence, les opérations d'emballage peuvent être plus rapides et la charge est mieux emballée. L'invention est particulièrement utile si la charge comprend plusieurs objets devant être groupés ou si la charge doit rester au repos.

L'invention implique la mise en oeuvre de génératrices d'étirage du film en matière plastique ainsi qu'il est décrit dans le brevet français 74 27653, publié sous le n° 2 281 275 ainsi que dans son addition n° 83 1284. Contrairement à ce qui est décrit dans le brevet français 74 27653, publié sous le n° 2 281 275 ainsi que dans son addition n° 83 1284, la présente invention réalise l'étirage du film en matière plastique à la fois dans sa longueur et dans sa largeur.

L'invention telle qu'elle est revendiquée concerne donc, dans un premier aspect un appareil pour étirer un film en matière plastique étirable comprenant des moyens d'alimentation en film et des moyens d'étirage, rotatifs, comprenant une pluralité de génératrices parallèles à un axe de rotation, à travers lesquelles passe le film, capables d'étirer le film dans sa longueur caractérisé en ce qu'il comporte des moyens pour que le film intercepte les moyens d'étirage en étant orienté en oblique et incliné par rapport aux génératrices des moyens d'étirage avec un angle compris entre 0° et 90° ; et des moyens de compensation du film le long du périmètre des moyens d'étirage comprenant des moyens d'entraînement axial des génératrices ; ce qui a pour effet l'étirage bi-axial du film dans sa longueur et sa largeur.

Elle concerne, aussi, un procédé d'emballage d'une charge avec du film en matière plastique étirable comprenant les étapes consistant à : placer un objet sur un support ; fournir du film en matière plastique étirable ; faire passer le film sur des moyens d'étirage rotatifs comprenant une pluralité de génératrices parallèles à un axe de rotation, capables d'étirer le film dans sa longueur ; activer les moyens d'étirage de manière à étirer le film et transporter le film ayant été étiré autour d'une charge pour former un emballage caractérisé par le fait qu'il comprend l'étape consistant à orienter le film en oblique par rapport aux moyens d'étirage pour qu'il intercepte les moyens d'étirage en étant incliné par rapport à ses génératrices avec un angle compris entre 0° et 90°, et pour déplacer les génératrices dans une direction axiale et de façon coordonnée.

L'invention concerne un dispositif d'étirage comprenant une pluralité de génératrices placées substantiellement parallèlement par rapport à un axe de rotation ; des moyens d'entraînement des génératrices le long d'un chemin décentré ou formant excentrique par rapport à un axe central ; et des moyens pour entraîner les génératrices dans les directions axiales, de façon échelonnée et coordonnée. Le nombre de génératrices est préférentiellement compris entre six et huit, mais d'autres possibilités sont envisageables.

Dans un appareil automatique d'étirage de film, le dispositif est mis en oeuvre pour réaliser un motif d'étirage bi-axial sur le film. Un appareil comprend des moyens d'alimentation en film en matière plastique étirable, des moyens pour étirer automatiquement le film ainsi fourni, et des moyens pour orienter le film fourni avec un certain angle par rapport aux moyens d'étirage pour étirer le film à la fois dans le sens de sa longueur et dans le sens de sa largeur.

Dans une forme de réalisation possible, le film est également placé avec un certain angle et partiellement autour d'un second appareil d'étirage orienté par rapport au film avec un angle qui est essentiellement égal et opposé à l'angle du premier dispositif d'étirage.

Comme le matériau est en contact avec les génératrices, la distance entre les génératrices et l'axe central est augmentée, et le matériau entre les génératrices est donc étiré. Du fait que le film intercepte le dispositif avec un certain angle, l'étirage forme un certain angle par rapport à la longueur et à la largeur du film. La proportion d'étirage dans chaque direction dépend de l'angle d'intersection entre le film et le dispositif d'étirage. Lorsque le film passe à travers et partiellement autour du dispositif d'étirage rotatif, les génératrices changent de position axiale. Cela compense la tendance du film ainsi dévié de glisser ou de se déplacer ou de changer d'orientation par rapport au dispositif d'étirage.

Après engagement avec le film, les génératrices se déplacent d'un côté à l'autre du dispositif d'étirage. La distance sur laquelle les génératrices se déplacent dans la direction axiale dépend de l'angle d'intersection entre le film en matière plastique et le dispositif.

Le procédé pour mettre en oeuvre l'invention à l'emballage d'une charge avec un film en matière plastique comprend les étapes suivantes : on place un objet sur un support, on fournit du film en matière plastique étirable et on incline le film par rapport aux moyens d'étirage, on active les moyens d'étirage pour étirer le film dans le sens de la longueur et le sens de la largeur du film et on forme un emballage. Du fait du frottement à l'intersection entre le film en matière plastique et les génératrices, la tendance du film au "NECK DOWN" lors de l'étirage est diminuée. Cependant entre les zones d'intersection le film peut être sujet à un certain "NECK DOWN". Cela conduit à un film qui présente un motif d'étirage qui correspond à ces zones d'intersection. Le produit, selon l'invention comprend donc un film en matière plastique étiré de façon bi-axiale et un motif d'étirage comprenant une série de zones périodiques et en augmentation dans lesquelles le film a été substantiellement empêché et des régions dans lesquelles le "NECK DOWN" a été substantiellement non empêché.

L'étirage dans la direction transversale du film peut être augmenté en utilisant deux dispositifs d'étirage qui superposent le motif du premier dispositif d'étirage au second motif du dispositif correspondant. L'entraînement du film à travers le second dispositif d'étirage a un angle qui est approximativement égal à l'opposé de l'angle sur le premier dispositif d'étirage procure un motif d'étirage dans une direction opposée à celle précédemment obtenue. Cela tend à maximiser l'étirage le long des axes du film. Naturellement, la valeur de l'angle peut être adaptée pour correspondre à la demande de chaque application particulière

L'invention sera bien comprise grâce à la description qui suivra en référence aux dessins annexés dans lesquels:

- La figure 1 est une vue en perspective d'un dispositif d'étirage avec le film d'étirage monté dessus.
- La figure 2 est une vue de côté du dispositif d'étirage avec le film en matière plastique monté dessus.
- La figure 3 est une vue de côté interne illustrant une came du dispositif.
- La figure 4 est une vue en perspective d'un dispositif d'étirage associé à une machine d'emballage par banderolage.
- La figure 5 est une vue en perspective de deux dispositifs d'étirage associés à une machine d'emballage par banderolage.

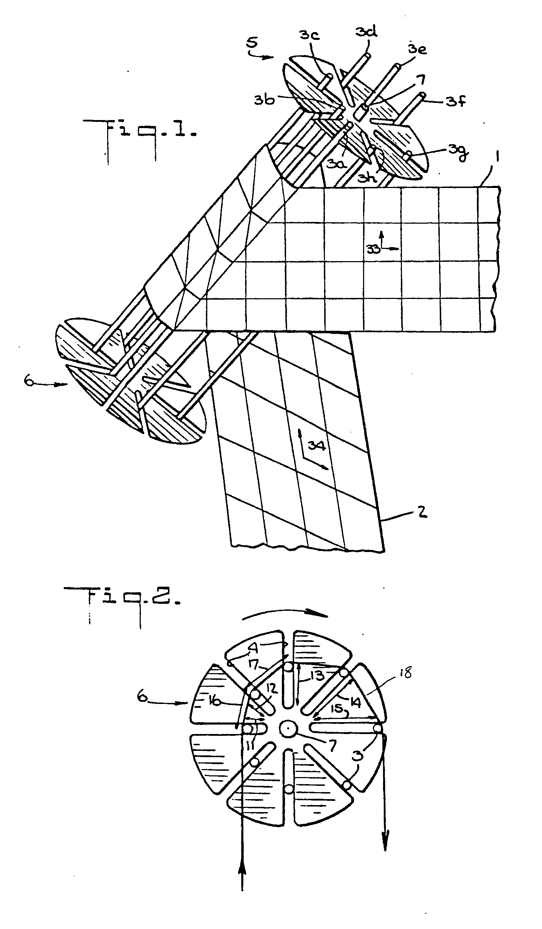

On se réfère à la figure 1 sur laquelle est représentée un dispositif d'étirage dans lequel un film en matière plastique 1 est étiré pour former un film en matière plastique 2 étiré. Le film 1 est orienté en oblique c'est-à-dire incliné à travers une d'une série de génératrices 3 placées substantiellement parallèlement les unes aux autres et situées dans des fentes radiales 4. Les fentes 4 sont ménagées dans des disques 5, 6 coaxiaux et écartés l'un de l'autre. Les fentes 4 autorisent les génératrices 3 à se déplacer dans une direction perpendiculaire à l'axe de rotation. En conséquence, la distance entre les génératrices 3 peut être modifiée tout en gardant un parallélisme substantiel entre les génératrices. Les disques 5, 6 sont montés en rotation sur un arbre moteur 7 qui définit l'axe de rotation, de manière à venir en prise avec le film ou faire avancer le film sur la configuration de génératrices 3.

La première génératrice 3a est située à proximité de l'arbre moteur 7 au moment ou le film en matière plastique vient au contact pour la première fois avec un certain angle par rapport à la génératrice. Du fait que les disques 5 et 6 pivotent le film 1 est entraîné jusqu'à la deuxième génératrice 3b puis jusqu'à la génératrice 3c et ainsi de suite. Simultanément, les génératrices 3 sont déplacées le long d'un chemin radial défini par des fentes 4 de manière que la distance entre les génératrices adjacentes soit augmentée.

La première génératrice 3a est déplacée simultanément dans une direction axiale, c'est-à-dire parallèle à l'arbre moteur 7 de manière à compenser la tendance du film en matière plastique de glisser ou se déplacer le long du dispositif d'étirage rotatif. Chaque génératrice se déplace de façon échelonnée et coordonnée avec les autres génératrices du dispositif. Cette coordination du mouvement axial des génératrices 3 est illustrée par les positions occupées par les génératrices durant un cycle correspondant à une révolution du dispositif d'étirage. Après environ une demi-révolution, les génératrices atteignent leur point le plus éloigné de l'arbre moteur 7 et le mouvement dans la direction axiale est alors à son maximum. Lorsque la rotation continue, le contact entre les génératrices et le film en matière plastique 16 cesse et les génératrices reviennent à leur position proche de l'arbre moteur 7 et dans la direction axiale opposée en vue de recommencer un autre cycle.

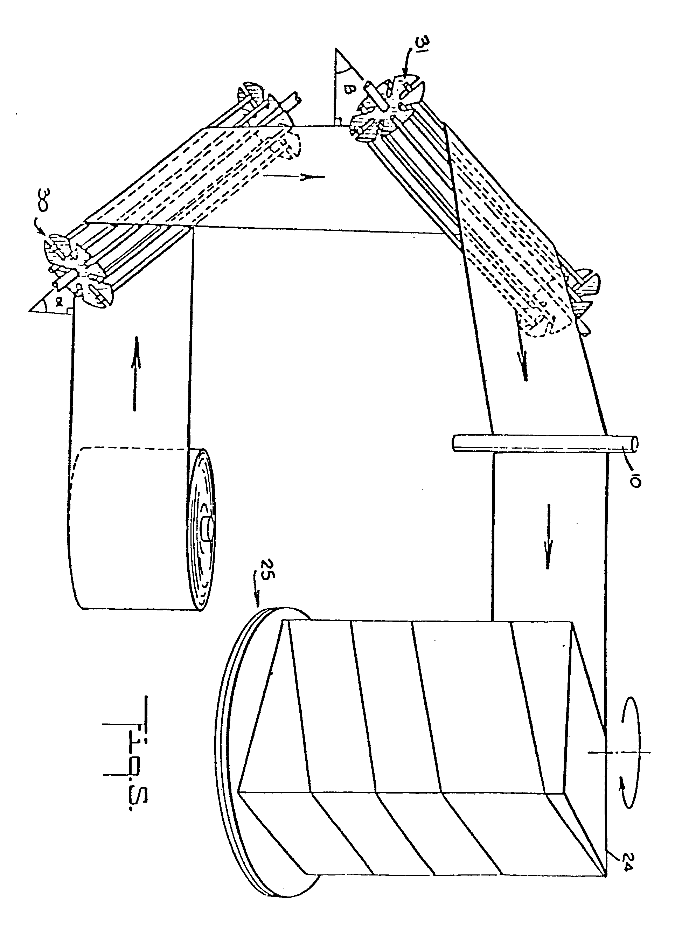

La figure 2 illustre comment la rotation des génératrices sur un chemin axial produit l'étirage du film. Lorsque le disque 6 est entraîné autour de l'arbre moteur 7 les génératrices 3 sont déplacées le long du chemin radial défini par les fentes 4 qui permet de faire varier la distance entre les génératrices adjacentes. Ainsi, comme le film en matière plastique initialement est en contact avec les génératrices, la distance 11 est inférieure ou égale à la distance 12. De la même manière, la distance 13 est supérieure à la distance 12 et inférieure à la distance 14. Lorsque les génératrices sont à leur extension maximale, la distance 11 est augmentée jusqu'à la distance 15 et la distance 16 augmentée jusqu'à la distance 18. La rotation des génératrices pour provoquer leur déplacement sur un chemin excentrique ou décentré provoque donc l'étirage du film en matière plastique qui devient distordu et étiré. Les distances 11, 12, 13, 14 et 15 mentionnées correspondent aux positions des génératrices sur les chemins radiaux c'est-à-dire à la distance entre les génératrices 3 et l'arbre moteur 7. Les distances 16 et 18 sont des écartements entre deux génératrices adjacentes respectivement au début et à la fin de l'étirage.

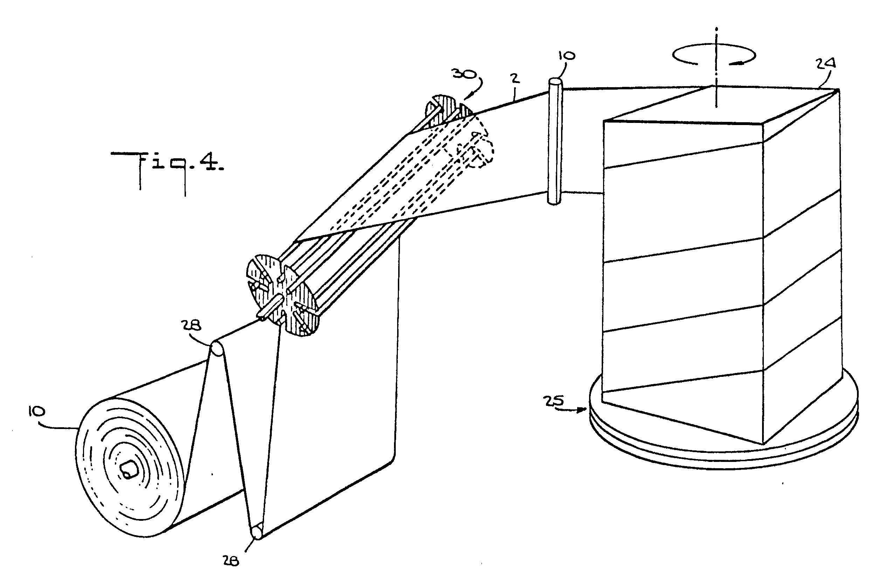

La figure 3 est une vue en coupe du dispositif d'étirage. Les génératrices 3 sont placées de manière à traverser les disques 5 et 6 à travers les fentes 4. Les génératrices sont placées à proximité de la surface d'une came 21. Un insert 19 court dans un canal 20 de manière à assujettir les génératrices à la came 21. La rotation des génératrices 3 autour de la came 21 produit le cheminement excentrique des génératrices. Ce mouvement est réalisé grâce à un moteur 23 qui entraîne les disques 5 et 6 sur la came. De plus, une fente 22 forme une hélice autour de la came de manière à provoquer le déplacement des génératrices de la position 8 à la position 9 puis le retour de la position 9 à la position 8 c'est-à-dire le mouvement axial des génératrices. Afin de diminuer les forces de frottement, les génératrices sont montées de manière à pivoter dans des roulements à billes.

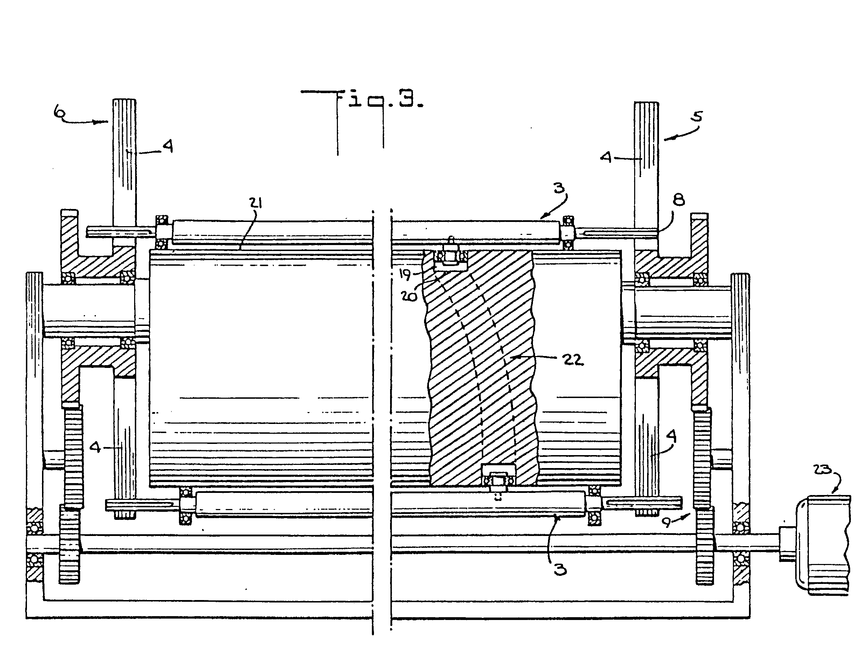

La figure 4 est une vue en perspective du dispositif d'étirage incorporé à une machine d'emballage par banderolage. Le dispositif d'étirage peut, en variante, être incorporé à une machine de type rideau. Une bobine de film en matière plastique étirable 10 est déroulée sous une tension exercée par des moyens de friction. L'alimentation en film est réalisée par et à travers une configuration de rouleaux 28 qui assurent une tension correcte et un alignement du film. Le film est ensuite dévié à travers le dispositif d'étirage 30 de manière à permettre au film d'être étiré de façon bi-axiale.

Le film et maintenu sous tension et placé autour d'une charge 24 pour former un emballage.

La figure 5 est une vue en perspective d'un double dispositif d'étirage incorporé à une machine d'emballage par banderolage. Ici encore, une application à une machine de type rideau est également possible. Le film en matière plastique tendu est incliné à travers les dispositifs d'étirage 30 et 31 qui sont orientés avec des angles respectivement α et β égaux et opposés l'un à l'autre. Après que l'étirage avec le dispositif ait été réalisé, le film passe sur un rouleau 10 qui réalise l'alignement du film pour former une spirale d'emballage. La charge 24 est montée mobile sur une table tournante 25 de manière à permettre au film en matière plastique de s'enrouler autour de la charge, sous tension, et ainsi de former un banderolage hélicoïdal.

La figure 1 illustre également l'étirage réalisé sur un filet en matière plastique qui, lorsqu'il n'est pas étiré, comporte un motif rectiligne 33. Comme le matériau est incliné par rapport au dispositif 30, il est en contact avec les génératrices 3. Du fait de l'inclinaison du film sur le dispositif d'étirage avec un certain angle, l'étirage entre les génératrices est également incliné. Avec une force d'étirage, comprenant des composantes à la fois dans les directions longitudinales et transversales, cet étirage bi-axial distord le motif en une configuration en parallèlogramme 34. Du fait de l'étirage du film, la base et la largeur du parallèlogramme 34 sont augmentées.

L'invention concerne donc d'abord un appareil pour réaliser automatiquement l'étirage bi-axial d'un film en matière plastique comprenant des moyens d'alimentation en film en matière plastique étirable, des moyens pour étirer automatiquement le film ainsi alimenté et des moyens pour orienter le film avec un certain angle par rapport à des moyens d'étirage pour étirer le film dans sa longueur et dans sa largeur. Ces moyens d'étirage comprennent une pluralité de génératrices, les génératrices étant placées substantiellement en alignement parallèle et déplacées de manière à définir un chemin excentrique ou décentré qui vient au contact avec friction et étire le film. L'appareil comprend également des moyens de compensation du film le long du périmètre des moyens d'étirage tels que des moyens d'entraînement axial des génératrices. L'angle entre le film et les moyens d'étirage est compris entre 0 et 90°. L'appareil comprend également des moyens pour régler le degré d'étirage dans la largeur du film.

L'invention concerne également un appareil qui comprend des moyens d'alimentation en film étirable, des moyens pour étirer automatiquement le film, l'étirage automatique étant réalisé simultanément dans les directions longitudinale et transversale du film pour produire un film étiré de façon bi-axiale; et des moyens pour emballer la charge avec le film ainsi étiré de façon bi-axiale. Les moyens d'étirage comprennent un premier dispositif d'étirage ayant une pluralité de génératrices placées substantiellement en alignement parallèle, des moyens pour déplacer les génératrices le long d'un chemin excentrique ou décentré par rapport à un axe central de manière que la distance entre les génératrices adjacentes augmentent, le film étant en contact avec friction avec les génératrices adjacentes de manière à étirer le film et des moyens pour déplacer chaque génératrice en direction axiale et de façon coordonnée et échelonnée pour compenser le mouvement du film le long du dispositif et des moyens pour orienter le film avec un certain angle par rapport au dispositif d'étirage pour produire l'étirage dans des directions longitudinale et transversale du film et ainsi étirer de façon bi-axiale le film. L'angle entre le film et le dispositif d'étirage est compris entre 0 et 90°. L'appareil comprend également des seconds moyens pour étirer automatiquement et de façon bi-axial le film, l'étirage automatique étant réalisé dans les directions longitudinale et transversale du film. L'appareil comporte en outre un second dispositif d'étirage comprenant une pluralité de génératrices placées substantiellement en alignement parallèle, des moyens pour déplacer les génératrices le long d'un chemin excentrique ou décentré par rapport à un axe central de manière que la distance entre les génératrices adjacentes augmentent, le film étant en contact avec friction avec les génératrices adjacentes de manière à étirer le film et des moyens pour déplacer chaque génératrice en direction axiale et de façon coordonnée et échelonnée pour compenser le mouvement du film le long du dispositif et des moyens pour orienter le film avec un certain angle par rapport au dispositif d'étirage, l'angle étant substantiellement égal et opposé à l'angle avec lequel le film est orienté sur le premier dispositif d'étirage. Les génératrices du second dispositif d'étirage se déplacent sur un chemin excentrique ou décentré plus vite que les génératrices du premier dispositif d'étirage. Le chemin excentrique ou décentré des génératrices dans le second dispositif d'étirage a un périmètre plus grand que le chemin dans le premier dispositif d'étirage. La charge est emballée de manière que le film en matière plastique étiré de façon bi-axiale est appliqué sur la surface d'une charge à une vitesse supérieure à la vitesse à laquelle le film passe sur le second dispositif d'étirage.

L'invention concerne en troisième lieu un produit comprenant un film en matière plastique étiré de façon bi-axiale et un motif d'étirage comprenant une série de zones périodiques et en augmentation de variations de "NECK DOWN". Les motifs d'étirage comprennent alternativement une série de régions dans lesquelles le "NECK DOWN" a été substantiellement empêché et des régions dans lesquelles le "NECK DOWN" n'a pas été substantiellement non empêché.

L'invention concerne en quatrième lieu un procédé d'emballage d'une charge avec du film en matière plastique étirable comprenant les étapes consistant à : placer un objet sur un support; fournir du film en matière plastique étirable; incliner le film avec un certain angle par rapport à des moyens d'étirage; activer les moyens d'étirage de manière à étirer le film dans sa longueur et dans largeur et transporter le film étiré autour d'une charge pour former un emballage.

Plus précisément, l'invention concerne un procédé d'emballage d'une charge avec du film en matière plastique étirable comprenant les étapes consistant à : Placer un objet sur un support; Fournir du film en matière plastique étirable; Activer un premier dispositif d'étirage comprenant une pluralité de génératrices ayant une disposition substantiellement parallèle et des moyens pour entraîner les génératrices sur un chemin excentrique ou décentré par rapport à un axe central ainsi que des moyens pour déplacer les génératrices dans une direction axiale et façon coordonnée; incliner le film à travers et par rapport à un premier dispositif d'étirage pour étirer le film de façon bi-axiale et enfin transporter le film étiré sur une charge pour former un emballage. Le procédé comprend également les étapes consistant à : Activer un second dispositif d'étirage comprenant une pluralité de génératrices ayant une disposition substantiellement parallèle et des moyens pour entraîner les génératrices dans un chemin excentrique ou décentré par rapport à un axe central ainsi que des moyens pour déplacer les génératrices dans une direction axiale et de façon coordonnée; Incliner le film depuis le premier dispositif d'étirage à travers le second dispositif d'étirage avec un angle substantiellement égal et opposé à l'angle avec lequel le film est orienté dans le premier dispositif d'étirage de manière à produire du film étiré de façon bi-axiale.

## Revendications

1. Appareil pour étirer un film en matière plastique étirable comprenant des moyens d'alimentation en film et des moyens d'étirage (3, 4, 5, 6, 7), rotatifs, comprenant une pluralité de génératrices parallèles à un axe de rotation, à travers lesquelles passe le film, capables d'étirer le film dans sa longueur caractérisé en ce qu'il comporte des moyens pour que le film (1) intercepte les moyens d'étirage (3, 4, 5, 6, 7) en étant orienté en oblique et incliné par rapport aux génératrices (3) des moyens d'étirage avec un angle compris entre 0° et 90°; et des moyens de compensation du film (1) le long du périmètre des moyens d'étirage (3, 4, 5, 6, 7) comprenant des moyens d'entraînement axial des génératrices (3); ce qui a pour effet l'étirage bi-axial du film dans sa longueur et sa largeur.

2. Appareil selon la revendication 1 caractérisé en ce qu'il comprend également des moyens pour régler le degré d'étirage dans la largeur du film.

3. Appareil selon l'une quelconque des revendications 1 et 2 caractérisé en ce que les moyens d'étirage comprennent des moyens pour déplacer les génératrices (3) le long d'un chemin excentrique ou décentré par rapport à un axe central de manière que la distance entre les génératrices adjacentes (3) augmente, le film étant en contact avec friction avec les génératrices adjacentes (3) de manière à étirer le film (1); et par le fait que les moyens de compensation comprennent des moyens pour déplacer chaque génératrice (3) en direction axiale de façon coordonnée et échelonnée.

4. Machine pour emballer une charge avec le film en matière plastique étirable comprenant un appareil pour l'étirage bi-axial du film selon l'une quelconque des revendications 1 à 3.

5. Machine selon la revendication 4 caractérisée en ce qu'elle comporte un second appareil pour l'étirage biaxial du film.

6. Machine selon la revendication 5 caractérisée en ce que l'angle d'inclinaison β du film sur le second appareil d'étirage bi-axial qui est substantiellement égal et opposé à l'angle d'inclinaison du film sur le premier appareil d'étirage bi-axial.

7. Machine selon la revendication 5 caractérisée par le fait que les génératrices du second appareil d'étirage se déplacent sur un chemin excentrique ou décentré plus vite que les génératrices du premier appareil d'étirage.

8. Machine selon la revendication 5 caractérisée par le fait que le chemin excentrique ou décentré des génératrices dans le second appareil d'étirage a un périmètre plus grand que le chemin dans le premier appareil d'étirage.

9. Machine selon la revendication 5 caractérisée par le fait que la charge est emballée de manière que le film en matière plastique étiré de façon bi-axiale est appliqué sur la surface de la charge à une vitesse supérieure à la vitesse à laquelle le film passe sur le second appareil d'étirage.

10. Procédé d'emballage d'une charge avec du film en matière plastique étirable comprenant les étapes consistant à : placer un objet sur un support : fournir du film en matière plastique étirable ; faire passer le film sur des moyens d'étirage rotatifs comprenant une pluralité de génératrices parallèles à un axe de rotation, capables d'étirer le film dans sa longueur ; activer les moyens d'étirage de manière à étirer le film et transporter le film ayant été étiré autour d'une charge pour former un emballage caractérisé par le fait qu'il comprend l'étape consistant à orienter le film en oblique par rapport aux moyens d'étirage pour qu'il intercepte les moyens d'étirage en étant incliné par rapport à ses génératrices avec un angle compris entre 0° et 90°, et pour déplacer les génératrices dans une direction axiale et de façon coordonnée.

11. Procédé Selon la revendication 10 caractérisé en ce qu'il comprend également les étapes consistant à faire passer le film sur des seconds moyens d'étirage rotatifs comprenant une pluralité de génératrices parallèlles à un axe de rotation, capables d'étirer le film dans sa longueur ; activer les moyens seconds d'étirage ; et orienter le film en oblique par rapport aux seconds moyens d'étirage pour qu'il intercepte les seconds moyens d'étirage en étant incliné par rapport à ses génératrices avec un angle compris entre 0° et 90°.

## Claims

1. Apparatus for drawing a film of drawable plastic comprising means of feeding the film and rotary means of drawing (3,4,5,6,7) comprising a plurality of generatrices which are parallel to an axis of rotation, across which the film passes, and which are capable of drawing the film along its length, characterised in that it comprises means in order that the film (1) intercepts the means of drawing (3,4,5,6,7) while being obliquely oriented and inclined to the generatrices (3) of the means of drawing at an angle of between 0° and 90°; and means of compensation of the film (1) along the perimeter of the drawing means (3,4,5,6,7), comprising means of axial driving of the generatrices (3); which results in biaxial drawing of the film along its length and its width.

2. Apparatus according to Claim 1, characterised in that it comprises also means for adjusting the degree of draw across the width of the film.

3. Apparatus according to either of Claims 1 and 2, characterised in that the means of drawing comprise means for moving the generatrices (3) along a path which is eccentric or off-centre with respect to a central axis in such a manner that the distance between the adjacent generatrices (3) increases, the film being in frictional contact with the adjacent generatrices (3) so as to draw the film (1); and in that the means of compensation comprise means for displacing each generatrix (3) in an axial direction in a co-ordinated and step-wise fashion.

4. Machine for wrapping a load with the film of drawable plastic comprising an apparatus for the biaxial drawing of the film according to any one of Claims 1 to 3.

5. Machine according to Claim 4, characterised in that it comprises a second apparatus for the biaxial drawing of the film.

6. Machine according to Claim 5, characterised in that the angle of inclination β of the film to the second biaxial drawing apparatus is substantially equal to and opposite to the angle of inclination of the film to the first biaxial drawing apparatus.

7. Machine according to Claim 5, characterised in that the generatrices of the second drawing apparatus move on an eccentric or off-centre path more rapidly than the generatrices of the first drawing apparatus.

8. Machine according to Claim 5, characterised in that the eccentric or off-centre path of the generatrices in the second drawing apparatus has a perimeter larger than the path in the first drawing apparatus.

9. Machine according to Claim 5, characterised in that the load is wrapped in such a manner that the film of plastic drawn in a biaxial fashion is applied over the surface of the load at a speed greater than the speed at which the film passes over the second drawing apparatus.

10. Process of wrapping a load with the film of drawable plastic comprising the stages consisting of: placing an object on a support; supplying film of drawable plastic; passing the film over rotary means of drawing comprising a plurality of generatrices which are parallel to an axis of rotation, and are capable of drawing the film along its length; activating the means of drawing so as to draw the film and transporting the film having been drawn around a load to form a wrapping, characterised in that it comprises the step consisting of orienting the film obliquely with respect to the drawing means in order that it intercepts the drawing means while being inclined with respect to its generatrices at an angle of between 0° and 90°, and for displacing the generatrices in an axial direction and in a co-ordinated fashion.

11. Process according to Claim 10, characterised in that it also comprises the steps consisting of passing the film over second rotary means of drawing comprising a plurality of generatrices which are parallel to an axis of rotation and are capable of drawing the film along its length; activating the second means of drawing; and orienting the film obliquely with respect to the second drawing means in order that it intercepts the second drawing means while being inclined with respect to its generatrices at an angle of between 0° and 90°.

## Patentansprüche

1. Vorrichtung zum Strecken einer Folie aus streckbarem Kunststoffmaterial, mit Mitteln zur Folienzuführung und mit drehbaren Streckmitteln (3,4,5,6,7), die eine Vielzahl von zu einer Rotationsachse parallelen Mantellinienelementen aufweisen, über die die Folie läuft und mit denen die Folie in Richtung ihrer Länge streckbar ist, **dadurch gekennzeichnet,** daß sie Mittel aufweist, damit die Folie (1) die Streckmittel (3,4,5,6,7) in der Weise erfaßt, daß sie schräg gerichtet und gegenüber den Mantellinienelementen (3) der Streckmittel unter einem Winkel zwischen 0° und 90° geneigt ist, und Folienkompensationsmittel längs des Umfanges der Streckmittel (3,4,5,6,7) besitzt, die Mittel zum axialen Bewegen der Mantellinienelemente (3) enthalten, wodurch ein bi-axiales Strecken der Folie in Richtung ihrer Länge und in Richtung ihrer Breite bewirkt ist.

2. Vorrichtung nach Anspruch 1, dadurch gekennzeichnet, daß sie auch Mittel zum Einstellen des Grades der Streckung in Richtung der Länge der Folie aufweist.

3. Vorrichtung nach Anspruch 1 oder 2, dadurch gekennzeichnet, daß die Streckmittel Mittel zum Verschieben der Mantellinienelemente (3) längs einer gegenüber einer mittigen Achse exzentrischen oder verschobenen Bahn, derart, daß der Abstand zwischen benachbarten Mantellinienelementen (3) zunimmt, aufweist, wobei die Folie in Reibkontakt mit den benachbarten Mantellinienelementen (3) derart ist, daß die Folie (1) gestreckt wird, und daß die Kompensationsmittel Mittel zum axialen Verschieben jedes Mantellinienelementes (3) in koordinierter und gestaffelter Weise besitzen.

4. Maschine zum Verpacken einer Charge mit der Folie aus streckbarem Kunststoffmaterial, mit einer Vorrichtung zum bi-axialen Strecken der Folie nach einem der Ansprüche 1 bis 3.

5. Maschine nach Anspruch 4, dadurch gekennzeichnet, daß sie eine zweite Vorrichtung zum bi-axialen Strecken der Folie aufweist.

6. Maschine nach Anspruch 5, dadurch gekennzeichnet, daß der Neigungswinkel $\beta$ der Folie gegenüber der zweiten bi-axialen Streckvorrichtung im wesentlichen gleich und entgegengesetzt zum Neigungswinkel der Folie gegenüber der ersten bi-axialen Streckvorrichtung ist.

7. Maschine nach Anspruch 5, dadurch gekennzeichnet, daß die Mantellinienelemente der zweiten Streckvorrichtung sich auf einer exzentrischen oder versetzten Bahn schneller bewegen als die Mantellinienelemente der ersten Streckvorrichtung.

8. Maschine nach Anspruch 5, dadurch gekennzeichnet, daß die exzentrische oder versetzte Bahn der Mantellinienelemente in der zweiten Streckvorrichtung einen größeren Umfang als die Bahn in der ersten Streckvorrichtung aufweist.

9. Maschine nach Anspruch 5, dadurch gekennzeichnet, daß die Charge derart verpackt ist, daß die in biaxialer Weise gestreckte Folie aus Kunststoffmaterial auf die Oberfläche der Charge mit einer Geschwindigkeit aufgebracht ist, die großer ist als die Geschwindigkeit, mit der die Folie über die zweite Streckvorrichtung läuft.

10. Verfahren zum Verpacken einer Charge mit einer Folie aus streckbarem Kunststoffmaterial mit folgenden Schritten: Legen eines Gegenstandes auf eine Auflage, Anordnen einer Folie aus streckbarem Kunststoffmaterial, Führen der Folie über drehbare Streckmittel, die eine Vielzahl von zu einer Rotationsachse parallelen Mantellinienelementen zum Strecken der Folie in Richtung ihrer Länge aufweisen, Zuschalten der Streckmittel, derart, daß die Folie gestreckt wird, und Transportieren der gestreckten Folie um eine Charge zum Herstellen einer Verpakkung, dadurch gekennzeichnet, daß das Verfahren den Schritt aufweist, daß die Folie gegenüber den Streckmitteln schräg ausgerichtet wird, damit sie die Streckmittel in der Weise erfaßt, daß sie gegenüber deren Mantellinienelementen unter einem Winkel zwischen 0° und 90° geneigt ist, und daß die Mantellinienelemente in axialer Richtung koordiniert verschoben werden.

11. Verfahren nach Anspruch 10, dadurch gekennzeichnet, daß es auch die Schritte aufweist, daß die Folie über zweite rotierende Streckmittel geführt wird, die eine Vielzahl von zu einer Rotationsachse parallelen Mantellinienelementen aufweisen, mit denen die Folie in Richtung ihrer Länge gestreckt wird, daß die zweiten Streckmittel zugeschaltet werden und daß die Folie gegenüber den zweiten Streckmitteln schräg ausgerichtet wird, damit sie die zweiten Streckmittel in der Weise erfaßt, daß sie gegenüber deren Mantellinienelementen unter einem Winkel zwischen 0° und 90° geneigt ist.

Fig.1.

Fig.2.

Fig. 5.

EP 0 213 969 B1

Fig.4.

Fig.3.

EP 0 213 969 B1